# EUROPEAN PATENT SPECIFICATION

(11) **EP 2 659 570 B1**
(45) Date of publication and mention of the grant of the patent: **19.07.2017**
(21) Application number: 11793438.0
(22) Date of filing: 07.12.2011
(51) Int. Cl.: H02K 1/27, H02K 1/28

(54) **ROTOR PART OF A PERMANENT MAGNET SYNCHRONOUS MOTOR**
ROTORTEIL EINES PERMANENTMAGNET-SYNCHRONMOTORS
PARTIE ROTOR DE MOTEUR SYNCHRONE À AIMANTS PERMANENTS

(30) Priority: 29.12.2010 TR 201011101
(43) Date of publication of application: 06.11.2013
(73) Proprietor: Arçelik Anonim Sirketi, 34950 Istanbul (TR)
(72) Inventor: SONMEZ, Emin Gultekin, 34950 Istanbul (TR); IMAT, Yakup, 34950 Istanbul (TR); EKIN, Cihad, 34950 Istanbul (TR); FIRAT, Asuman, 34950 Istanbul (TR)
(86) International application number: PCT/EP2011/072069
(87) International publication number: WO 2012/089470

(56) References cited:
- EP-A1- 1 841 041
- DE-A1-102004 051 462
- JP-A- 2002 010 545
- US-A- 2 488 729
- US-A- 4 585 967
- US-A1- 2007 222 326

## Description

The present invention relates to the rotor of an electric motor which operates the pumps of the household devices such as dishwasher, washing machine.

The permanent magnet synchronous motors are used for operating the circulation or discharge pumps in household devices such as dishwasher or washing machine. The electric motors used in pumps can operate in water or humid environments and for preventing the said electric motors from corroding by providing leak-proofing, the rotor core and the magnets places thereon are coated with plastic material. Water leakage may occur particularly in the shaft hole which is disposed in the middle of the rotor and to which the motor shaft is mounted. Water reaches the metal laminations that form the rotor by being carried by the shaft and causes the laminations to corrode. In order to avoid the mentioned problem, in known embodiments, the gap between the shaft and the shaft hole in the rotor is entirely filled with plastic material; however, since the shaft is supported in the shaft hole in the rotor core by the plastic material, a strong connection cannot be obtained between the shaft and the rotor core and the shaft may dislodge from the rotor. When the motor shaft is mounted to the shaft hole in the rotor after the plastic injection process, the problem of centering is encountered and it becomes difficult to place the motor shaft into the rotor concentrically.

In the European Patent Application No EP 1841041, a rotor over which plastic injection is coated for increasing the resistance thereof against water and the production method thereof are explained.

In the European Patent Application No. EP 0982835, a permanent magnet motor is explained.

JP 2002 010545 A1 discloses a permanent magnet rotor wherein into an annular permanent magnet, a shaft is fit including grooves which are filled with a thermoplastic component. The portion of the shaft adjacent to the grooves can be regarded as a projection.

The aim of the present invention is the realization of a rotor which is used in the electric motor that operates the pumps of the household appliances such as dishwasher or washing machine, which is coated with plastic in order to provide leak-proofing against water and which is prevented from corroding.

The rotor realized in order to attain the aim of the present invention, explicated in the first claim and the respective claims thereof, is used in the electric motor which operates the circulation or water discharge pump of the household devices such as dishwasher and washing machine. The rotor is coated with plastic insulating layer for increasing the resistance thereof against water. In the rotor, the diameter of the shaft hole is greater than the diameter of the motor shaft and plastic insulating layer is injected to the gap between the motor shaft and the shaft hole, which is a susceptible region into which water may leak.

In the rotor of the present invention, lateral projections, which bear against the cylindrical inner surface of the shaft hole of the rotor by extending outwardly in the radial direction, are disposed on a middle portion of the motor shaft. The lateral projections provide the motor shaft to be supported before the plastic injection process by providing the metal and metal contact by means of the inner surface of the shaft hole. The motor shaft is mounted into the shaft hole concentrically by the snap-fitting method by means of the lateral projections arranged at certain intervals along the periphery of the motor shaft.

In an embodiment of the present invention, barriers, which extend towards the inner surface of the shaft hole from the motor shaft and which form obstruction in front of the water that may leak from over the motor shaft, are disposed in the motor shaft, at the top and bottom side of the lateral projections.

In another embodiment of the present invention, channels, which extend in the axial direction and which provide the plastic insulating material to pass therethrough from the top side to the bottom side of the lateral projections, are disposed between the lateral projections.

In another embodiment of the present invention, the rotor comprises slots which form recesses towards inside the core at the edge of the shaft hole and which extend inside the core along the shaft hole.

In the rotor of the present invention, the motor shaft is mounted to the core before the plastic injection process and the motor shaft is supported in the rotor core by being centered properly. Problems originating from the bearing of the motor shaft produced from metal material with the plastic material in the known embodiments are prevented, and a leak-proof shaft-rotor connection with high strength is obtained.

The rotor realized in order to attain the aim of the present invention is illustrated in the attached figures, where:

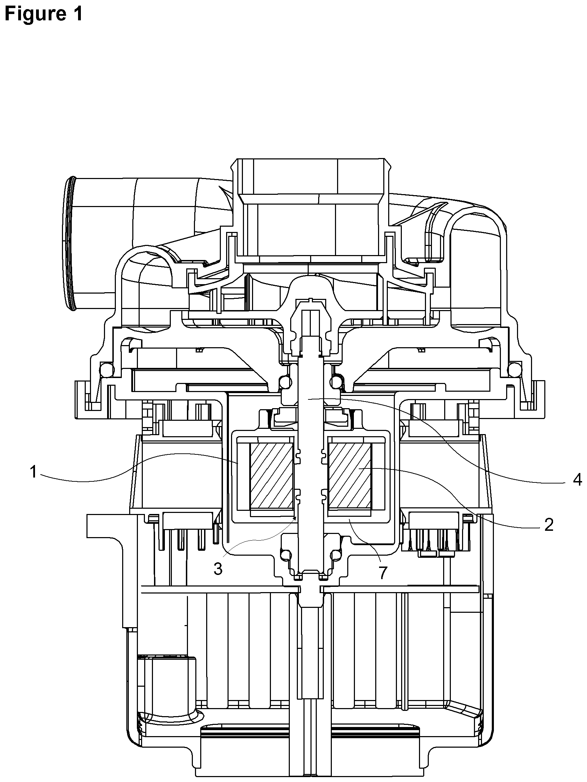

Figure 1 - is the cross-sectional view of a pump and the rotor disposed in the motor that operates the pump.
Figure 2 - is the perspective view of a rotor over which plastic insulating layer is coated.
Figure 3 - is the exploded view of a rotor.
Figure 4 - is the schematic view of a rotor and a motor shaft mounted to the rotor.
Figure 5 - is the perspective view of a motor shaft.
Figure 6 - is the schematic view of a rotor.

The elements illustrated in the figures are numbered as follows:
- 1.: Rotor
- 2.: Core
- 3.: Shaft hole
- 4.: Motor shaft
- 5.: Magnet
- 6.: Magnet holder
- 7.: Insulating layer
- 8.: Lateral projection
- 9.: Barrier
- 10.: Channel
- 11.: Slot

The rotor (1) suitable for using in the electric motors that operate the circulation or discharge pump of the household devices such as dishwasher or washing machine comprises a core (2) composed of magnetic steel laminations stacked one on the top of the other, a shaft hole (3) disposed in the middle of the core (2), a motor shaft (4) placed into the shaft hole (3) and the diameter of which is less than the diameter of the shaft hole (3), more than one magnet (5) which is successively placed all around the outer surface of the core (2), one or more than one magnet holder (6) which is mounted to the planar front and rear surfaces of the core (2), provides the magnets (5) to be placed at the periphery of the core (2) at equal intervals and extends between the magnets (5), and an insulating layer (7) which coats the outer surfaces of the core (2), the magnets (5) and the magnet holders (6) by injecting plastic material on the rotor (1) by the injection molding method and which provides leak-proofing between the motor shaft (4) and the core (2) by filling the gap (B) between the inner surface of the shaft hole (3) and the motor shaft (4).

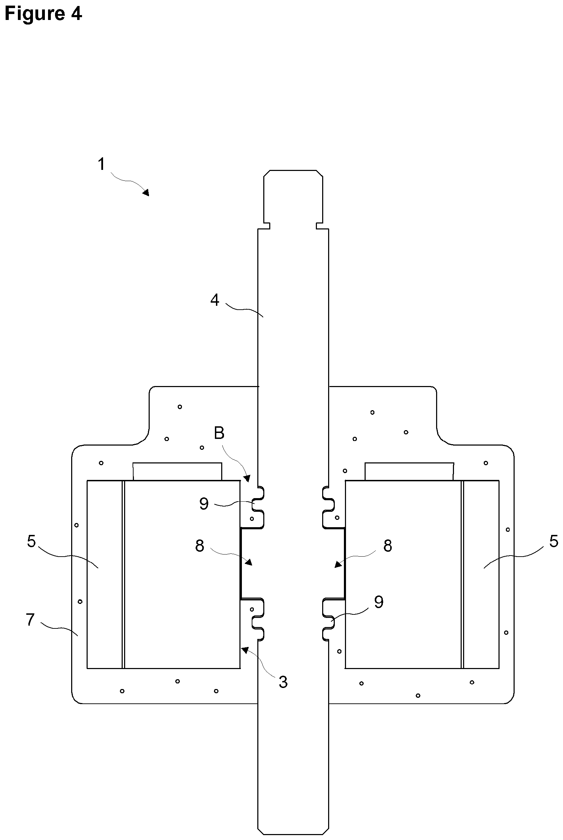

The rotor (1) of the present invention comprises more than one lateral projection (8) which is disposed on the motor shaft (4), almost at the middle portion of the motor shaft (4) in the shaft hole (3), which bears against the cylindrical inner surface of the shaft hole (3) by extending outwardly in the radial direction through the gap (B) from the motor shaft (4) and which provides the motor shaft (4) to be supported by the inner surface of the shaft hole (3) before the plastic injection process (Figure 4, Figure 5, Figure 6).

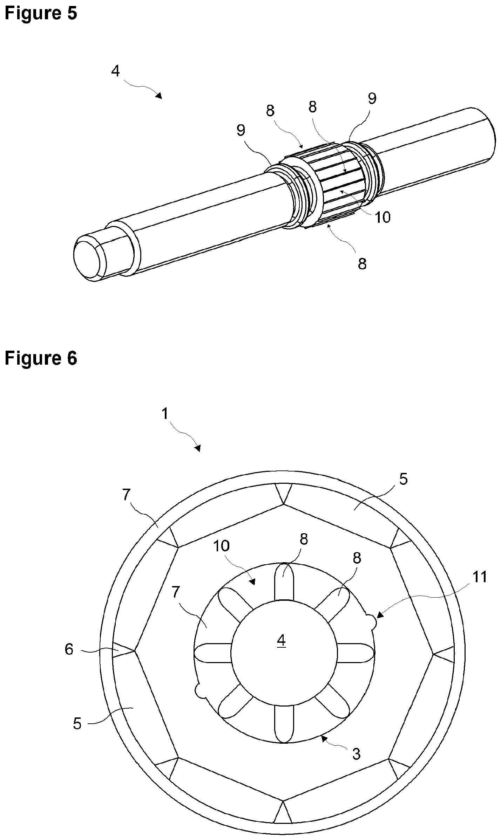

The lateral projections (8) are arranged at equal intervals along the periphery of the motor shaft (4) and provide the motor shaft (4) to be mounted into the shaft hole (3) concentrically by the snap-fitting method (Figure 5, Figure 6).

The motor shaft (4) is mounted to the shaft hole (3) before the plastic injection process. After the motor shaft (4) is mounted to the shaft hole (3) by means of the lateral projections (8), the insulating layer (7) is injected to the gap (B) between the motor shaft (4) and the shaft hole (3). The insulating layer (7) is furthermore injected to the outer surfaces of the magnets (5) and the magnet holders (6) and coated on the rotor (1).

In an embodiment of the present invention, the rotor (1) comprises one or more than one barrier (9) disposed at the top and bottom side of the lateral projections (8) as a circular projection on the motor shaft (4), which extends outwardly all around from the motor shaft (4) without contacting the inner surface of the shaft hole (3) and which forms obstruction in the shaft hole (3) in front of the water that may leak from over the motor shaft (4) (Figure 4, Figure 5). In case water leaks into the shaft hole (3) from over the outer surface of the motor shaft (4), the barrier (9) prevents the water from reaching the lateral projections (8) and the core (2) from there.

In another embodiment of the present invention, the rotor (1) comprises more than one channel (10) disposed between the lateral projections (8), extending in the axial direction in the shaft hole (3) along the lateral projections (8) and which provides, in the plastic injection process, the insulating layer (7) to pass from one side to the other side of the lateral projections (8) in the shaft hole (3) and thus provides the insulating layer (7) to fill the gap (B) entirely (Figure 5, Figure 6).

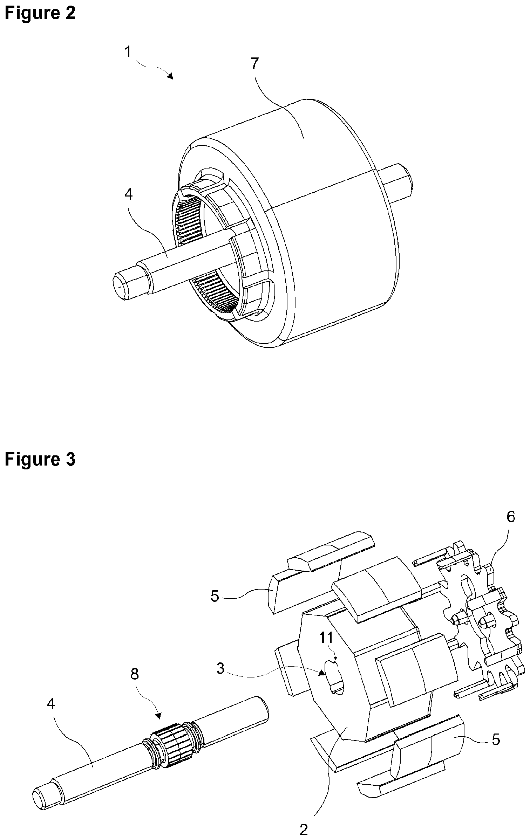

In another embodiment of the present invention, the rotor (1) comprises one or more than one slot (11) which forms semi-circular recess towards inside the core (2) from the edge of the shaft hole (3) and which extends inside the core (2) along the shaft hole (3) and which provide the insulating layer (7) injected to the shaft hole (3) to fill the gap (B) by easily moving forward inside the shaft hole (3) (Figure 3, Figure 6).

The insulating layer (7) injected onto the rotor (1) during the plastic injection process coats the outer surfaces of the magnets (5) and the magnet holders (6) and fills the gap (B) between the motor shaft (4) and the shaft hole (3). While moving forward between the motor shaft (4) and the shaft hole (3), the injected plastic material passes through the channels (10) between the lateral projections (8) and the slots (11) at the edge of the shaft hole (3) and fills the gap (B) homogenously.

During the production of the rotor (1) of the present invention, first the motor shaft (4) is mounted to the shaft hole (3) concentrically by the snap-fitting method by means of the lateral projections (8), and the plastic injection process is performed after the motor shaft (4) is mounted to the core (2). Thus, the motor shaft (4) is provided to be mounted to the core (2) so as not to dislodge from the shaft hole (3) before the plastic injection process. The motor shaft (4), the diameter of which is less than that of the shaft hole (3), is supported in the shaft hole (3) by direct (metal to metal) contact by the inner wall of the shaft hole (3) and a proper centering is provided.

It is to be understood that the present invention is not limited by the embodiments disclosed above and a person skilled in the art can easily introduce different embodiments. These should be considered within the scope of the protection disclosed by the claims of the present invention.

## Claims

1. A rotor (1) suitable for using in the electric motors that operate the circulation or discharge pump of the household advices, comprising a core (2), a shaft hole (3) disposed in the middle of the core (2), a motor shaft (4) placed into the shaft hole (3) and the diameter of which is less than the diameter of the shaft hole (3), more than one magnet (5) which is successively placed all around the outer surface of the core (2), and an insulating layer (7) which is produced by injecting plastic material, which coats the outer surfaces of the core (2) and the magnets (5) and fills the gap (B) between the inner surface of the shaft hole (3) and the motor shaft (4), **characterized in that** more than one lateral projection (8) which is disposed on the motor shaft (4), at a middle portion of the motor shaft (4) in the shaft hole (3), bearing against the cylindrical inner surface of the shaft hole (3) by extending outwardly in the radial direction from the motor shaft (4) and which provides the motor shaft (4) to be supported by the inner surface of the shaft hole (3), and being surrounded, at their axial faces as defined with regard to an axis of said motor shaft (4), by the plastic material of said insulation layer (7).

2. A rotor (1) as in Claim 1, **characterized in that** the lateral projections (8) which are arranged at equal intervals along the periphery of the motor shaft (4) and which provide the motor shaft (4) to be mounted into the shaft hole (3) concentrically.

3. A rotor (1) as in Claim 1 or 2, **characterized in that** one or more than one barrier (9) disposed at the top and bottom side of the lateral projections (8), which extends outwardly all around from the motor shaft (4) without contacting the inner surface of the shaft hole (3) and which forms an obstruction in the shaft hole (3) in front of the water that leaks from over the motor shaft (4).

4. A rotor (1) as in any one of the above claims, **characterized in that** more than one channel (10) disposed between the lateral projections (8), extending in the axial direction in the shaft hole (3) along the lateral projections (8) and which provides, in the plastic injection process, the insulating layer (7) to pass from one side to the other side of the lateral projections (8) in the shaft hole (3).

5. A rotor (1) as in any one of the above claims, **characterized in that** one or more than one slot (11) which forms a semi-circular recess towards inside the core (2) from the edge of the shaft hole (3) and which extend inside the core (2) along the shaft hole (3).

## Patentansprüche

1. Ein Rotor (1), der für den Einsatz in Elektromotoren, die die Umwälzpumpe und Abflusspumpe der Haushaltsgeräte antreiben, geignet ist und einen Nabel (2), eine Wellenbohrung (3), die in der Mitte des Nabels (2) angeordnet ist, eine Rotorwelle, (4), die in die Wellenbohrung (3) eingesetzt ist und deren Durchmesser kleiner als die Wellenbohrung (3) ist, mehrere Magneten (5), die auf alle Seiten der äußeren Fläche des Nabels (2) erfolgreich eingesetzt sind, eine Isolierschicht (7), die die Außenflächen des Nabels (2) und der Magneten (5) bedeckt und durch Einspritzen des Kunststoffmaterials in den Hohlraum (B) zwischen der Innenfläche der Wellenbohrung (3) und Rotorwelle, (4) erzeugt wird, **dadurch gekennzeichnet, dass** mehrere seitliche Vorsprünge (8), die in der Wellenbohrung (3) in der Mitte der Motorwelle (4) auf der Motorwelle (4) eingesetzt sind, die von der Motorwelle (4) ausgehend radial nach aussen erstreckend an die zylindrische Innenfläche der Wellenbohrung (3) anlehnen, die sicherstellen, dass die Motorwelle (4) von der Innenfläche der Wellenbohrung (3) unterstützt wird, die auf der axialen Flächen bezüglich der genannten Motorwelle (4) durch das Kunststoffmaterial der genannten Isolierschicht (7) umgegeben sind.

2. Ein Rotor (1) nach Anspruch 1 **gekennzeichnet durch** seitliche Vorsprünge (8), die über dem Umfang der Motorwelle (4) in gleichen Abständen angeordnet sind und sicherstellen, dass die Motorwelle (4) konzentrisch in der Wellenbohrung (3) montiert wird.

3. Ein Rotor (1) nach Anspruch 1 oder 2 **gekennzeichnet durch** mehrere Barriere (9), die auf die oberste Seite und auf die untere Seite der seitlichen Vorsprünge (8) eingesetzt sind, um das über die Motorwelle (4) auslaufende Wasser in der Wellenbohrung (3) zu verhindern, und die aus allen Seiten der Motorwelle (4) nach aussen erstrecken, ohne an die innere Fläche der Wellenbohrung (3) zu berühren

4. Ein Rotor (1) nach einem der vorhergehenden Ansprüche **gekennzeichnet durch** mehrere Kanäle (10), die zwischen den seitlichen Vorsprünge (8) angeordnet sind, die entlang der seitlichen Vorsprünge (8) in der Wellenbohrung (3) in axialer Richtung erstrecken, und beim Spritzgießverfahren sicherstellt, dass in der Wellenbohrung (3) die Isolierschicht (7) von einer Seite der seitlichen Vorsprünge (8) an die andere Seite durchtreten kann

5. Ein Rotor (1) nach einem der vorhergehenden Ansprüche **gekennzeichnet durch** mehrere Aushöhlungen (11), die aus der Kante der Wellenbohrung (3) in den Nabel (2) erstrecken und die entlang der Wellenbohrung (3) eine in dem Nabel (2) erstreckende halbkreisförmige Ausnehmung ausbilden.

## Revendications

1. Un rotor (1) apte à être utilisé dans les moteurs électriques qui actionnent la pompe de circulation ou de décharge des conseils ménagers, comprenant un noyau (2), un trou de l'arbre (3) disposé au milieu du noyau (2), un moteur de l'arbre (4) placé dans le trou de l'arbre (3) et dont le diamètre est inférieur au diamètre du trou de l'arbre (3), plus d'un aimant (5) qui est successivement placé autour de la surface extérieure du noyau (2), et une couche isolante (7) qui est produite par injection de matière plastique qui recouvre les surfaces extérieures du noyau (2) et les aimants (5) et remplit l'espace (B) entre la surface intérieure du trou de l'arbre (3) et l'arbre du moteur (4),
**caractérisé en ce que** plus d'une projection latérale (8) qui est disposée sur l'arbre du moteur (4), au niveau d'une partie médiane de l'arbre du moteur (4) dans le trou de l'arbre (3), s'appuyant contre la surface intérieure cylindrique du trou de l'arbre (3) en s'étendant vers l'extérieur dans la direction radiale à partir de l'arbre du moteur (4) et qui permet à l'arbre du moteur (4) d'être supporté par la surface intérieure du trou de l'arbre (3) et entouré sur leurs faces axial est el que défini par rapport à un axe dudit arbre de moteur (4), par la matière plastique de ladite couche isolante (7).

2. Un rotor (1) selon la revendication 1, **caractérisé en ce que** les saillies latérales (8) qui sont disposées à interval les égaux le long de la périphérie de l'arbre du moteur (4) et qui permettent à l'arbre du moteur (4) à monter dans le trou de l'arbre (3) concentriquement.

3. Un rotor (1) selon la revendication 1 ou 2, **caractérisé en ce qu'**une ou plus d'une barrière (9) disposées au niveau des côtés supérieur et inférieur des saillies latérales (8) qui s'étend vers l'extérieur tout autour de l'arbre du moteur (4) sans entrer en contact avec la surface intérieure du trou de l'arbre (3) et qui forme une obstruction dans le trou de l'arbre (3) devant l'eau qui fuit de l'arbre du moteur (4).

4. Un rotor (1) selon l'une quelconque des revendications précédentes, **caractérisé en ce que** plus d'un canal (10) disposé entre les saillies latérales (8) s'étendant dans la direction axiale dans le trou de l'arbre (3) le long des saillies latérales (8) et qui permet, dans le processus d'injection plastique, que la couche isolante (7) passe d'un côté à l'autre côté des saillies latérales (8) dans le trou de l'arbre (3).

5. Un rotor (1) selon l'une quelconque des revendications précédentes, **caractérisé en ce qu'**une ou plus d'une fente (11) qui forme un évidement semi-circulaire vers l'intérieur du noyau (2) à partir du bord du trou de l'arbre (3) et qui s'étend à l'intérieur du noyau (2) le long du trou de l'arbre (3).
